# FASCICULE DE BREVET EUROPEEN

(11) **EP 2 488 740 B1**
(45) Date de publication et mention de la délivrance du brevet: **21.02.2018**
(21) Numéro de dépôt: 10763721.7
(22) Date de dépôt: 14.10.2010
(51) Int. Cl.: F02C 7/052, F02C 3/073

(54) **DISPOSITIF DE FILTRAGE D'AIR EN ENTREE DE MOTEUR A COMBUSTION INTERNE AVEC MOYEN DE VENTILATION**
VORRICHTUNG ZUR FILTERUNG DER ANSAUGLUFT EINES VERBRENNUNGSMOTORS MIT LÜFTERVORRICHTUNG
DEVICE FOR FILTERING THE INTAKE AIR OF AN INTERNAL COMBUSTION ENGINE HAVING VENTILATION MEANS

(30) Priorité: 14.10.2009 FR 0957208
(43) Date de publication de la demande: 22.08.2012
(73) Titulaire: Safran Helicopter Engines, 64510 Bordes (FR)
(72) Inventeur: DESCUBES, Olivier, Pierre, F-64800 Nay (FR)
(74) Mandataire: Gevers & Orès
(86) Numéro de dépôt international: PCT/EP2010/065392
(87) Numéro de publication internationale: WO 2011/045363

(56) Documents cités:
- WO-A1-2006/059987
- FR-A1- 2 097 170
- FR-A1- 2 613 772
- FR-A1- 2 904 046
- GB-A- 2 257 752
- US-A- 3 016 109
- US-A- 3 421 296

## Description

La présente invention concerne le domaine des moteurs à combustion interne et plus particulièrement celui des moteurs à turbine à gaz tels qu'utilisés en aéronautique, notamment sur les hélicoptères. Elle vise le traitement de l'air d'admission de tels moteurs.

Un hélicoptère peut être amené à évoluer dans un environnement fortement chargé de particules libres, de sable ou de poussières par exemple. Lorsqu'il est proche du sol, au décollage ou à l'atterrissage, il soulève et met en suspension dans l'air une grande quantité de particules qui sont ingérées par les moteurs. Les moteurs voient leurs performances altérées et ils subissent une corrosion importante par les particules qui les traversent.

Afin de limiter ce phénomène il est connu de prévoir des dispositifs de traitement de l'air en entrée du moteur, désignés filtres anti sable, par lesquels les particules en suspension dans l'air admis sont séparées de ce dernier et evacuées. Un tel dispositif de filtrage d'air pour hélicoptère est divulgué dans le document US 3 421 296 A. Un filtre anti sable connu est de type à vortex. Il comprend une enceinte parallélépipédique ou annulaire dans laquelle sont disposés des éléments filtrant tubulaires, traversant d'une paroi de l'enceinte à l'autre, dans lesquels l'air est mis en mouvement tourbillonnaire. Une première sortie, axiale, est en communication avec le canal d'admission du moteur et une seconde sortie, latérale, débouche à l'intérieur de l'enceinte. L'intérieur de cette enceinte est ventilé pour assurer l'évacuation de l'air chargé en particules vers l'extérieur.

La ventilation, dite secondaire, est assurée par un dispositif permettant d'entraîner l'air chargé en particules, débit qui peut représenter jusqu'à 10% du débit de la machine.

Les dispositifs connus comprennent un ventilateur entraîné par un moteur électrique, le prélèvement de l'énergie électrique étant effectué au niveau du moteur même ou bien de l'hélicoptère. Le prélèvement nécessite des systèmes de coupure, de contrôle et de protection. Ainsi, bien que très souple car il permet de gérer le prélèvement en fonction des besoins et des phases de vol, ce dispositif est de mise en place relativement lourde et contraignante du point de vue du câblage et de la commande électrique.

Une autre solution connue consiste à assurer la ventilation au moyen d'un éjecteur par l'intermédiaire d'un venturi. Le flux nécessaire pour le fonctionnement de l'éjecteur est prélevé au niveau d'un étage à haute pression du moteur. Ce système présente l'avantage d'une grande fiabilité et d'être de masse relativement faible. Cependant le prélèvement à l'étage à haute pression est très couteux en termes de performance et réduit l'enveloppe de vol du moteur.

La demanderesse s'est fixé comme objectif de réaliser le débit de ventilation du système de filtrage par vortex par un moyen ne présentant pas les inconvénients de l'art antérieur.

L'objectif est également de réaliser un dispositif de ventilation présentant un meilleur compromis par rapport à l'art antérieur, entre sa masse, son impact sur les performances du moteur, son coût et son aptitude à la réparation.

On parvient à réaliser ces objectifs avec un dispositif de filtrage d'air en entrée de moteur à combustion interne comprenant au moins un élément de filtrage avec une entrée d'air à traiter, une première sortie d'air épuré vers le moteur et une deuxième sortie d'air vers l'extérieur, un moyen de ventilation assurant l'entraînement de l'air depuis ladite deuxième sortie d'air. Selon l'invention le moyen de ventilation comprend une roue de ventilateur entraînée par une turbine mise en mouvement par un flux gazeux prélevé sur le moteur, la turbine et la roue de ventilateur étant disposées concentriquement l'une par rapport à l'autre.

L'emploi d'une turbine permet de diminuer le prélèvement par rapport aux systèmes avec éjecteur, le niveau de pression du flux gazeux peut être celui d'un niveau intermédiaire de compression ou encore celui d'un étage inférieur de turbine.

Notamment les ailettes formant la turbine sont disposées radialement à l'extérieur d'un anneau reliant les extrémités extérieures des ailettes du ventilateur.

On peut réaliser ainsi un ensemble monobloc d'entretien économique.

Avantageusement, la turbine est de type à action.

On réduit ainsi les besoins en étanchéité entre les deux flux traversant la turbine et la roue de ventilation respectivement. Selon l'invention, la roue de ventilateur et la turbine forment un rotor monté dans un carter dans lequel sont ménagés un canal central d'air de ventilation et un canal en forme d'au moins un secteur d'anneau d'alimentation de la turbine, le second canal étant concentrique au premier canal avec deux éléments de parois et étant à entrée radiale et sortie axiale. De préférence, la roue de ventilateur et la turbine forment un rotor en bout d'un arbre central monté dans une ogive dudit carter.

Le prélèvement de gaz peut être effectué, de préférence, soit au niveau du compresseur soit entre la turbine de puissance et la turbine haute pression soit entre les étages de la turbine de puissance.

D'autres caractéristiques et avantages ressortiront de la description qui suit d'un mode non limitatif de réalisation, en référence aux dessins sur lesquels :
La figure 1 montre schématiquement un dispositif de filtrage par vortex monté en entrée d'air d'un moteur à turbine à gaz,
La figure 2 montre un élément de filtrage du dispositif de la figure 1,
La figure 3 montre, vue en coupe axiale une réalisation conforme à l'invention,
La figure 4 est une vue selon la coupe A-A de la figure 3.

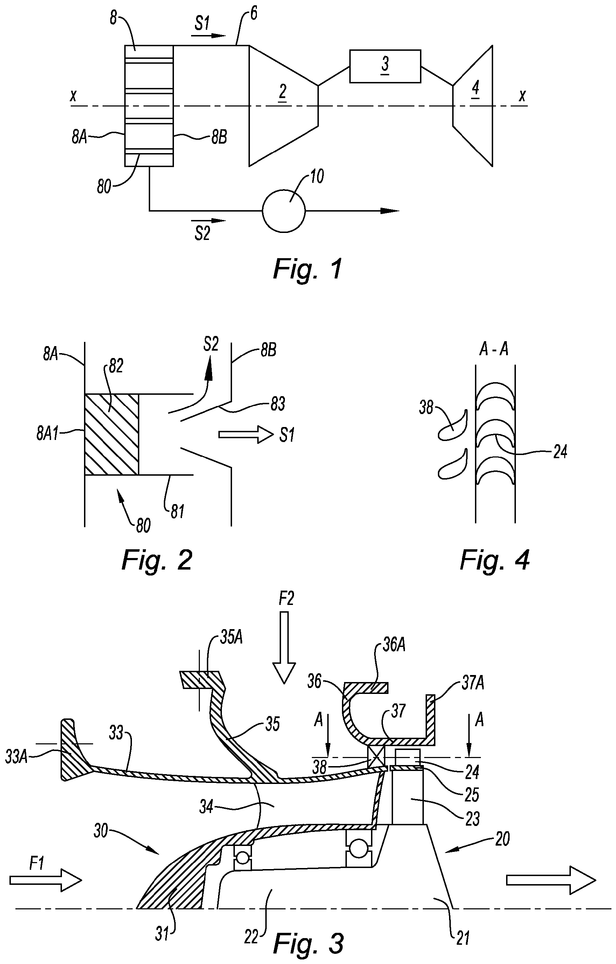

Le schéma de la figure 1 montre un exemple de moteur à turbine à gaz avec successivement le long de son axe principal XX, une section de compression 2 de l'air admis par le canal d'admission 6, une chambre de combustion 3 et une section de turbine 4. Le moteur peut être mono ou multi corps avec un corps à basse pression et un corps à haute pression. La section de compression peut comprendre un ou plusieurs étages axiaux et/ou un ou plusieurs étages centrifuges. De même la section de turbine peut comprendre un ou plusieurs étages en lignes reliés par un arbre central à un étage correspondant de compression. La section de turbine peut comprendre une turbine libre reliée à un arbre de prise de puissance.

Un filtre dit anti sable 8 est monté en travers du canal 6 d'admission d'air. Le filtre peut avoir une forme parallélépipédique ou annulaire selon la forme du canal d'entrée.

Le filtre 8 comprend deux parois, 8A et 8B, espacées l'une de l'autre. L'air entre par des ouvertures ménagées dans la paroi amont 8A et ressort, épuré des particules dont il est éventuellement chargé, par les orifices de la paroi aval 8B. L'aval et l'amont sont définis par rapport à la circulation de l'air à travers le moteur.

Pour réaliser cette épuration, des éléments 80 filtrants sont disposés entre les deux parois, débouchant dans les ouvertures des parois 8A et 8B. La figure 2 montre le principe de fonctionnement de ces éléments. Un élément 80 comprend un tube 81 ouvert sur un orifice de la paroi 8A. Il est pourvu d'ailettes 82 propres à imposer un mouvement tourbillonnaire à l'air entrant par une ouverture 8A1 de la paroi 8A. Du côté de la paroi 8B le tube 81 ménage une ouverture ici annulaire avec un tube en tronc de cône 83. Ce dernier débouche sur une ouverture pratiquée dans la paroi aval 8B. En fonctionnement, l'air ayant traversé la paroi 8A et mis en mouvement tourbillonnant dans la portion amont du tube 81. Les particules dont l'air est éventuellement chargé sont centrifugées le long de la face interne de la paroi du tube 81 et sont évacuées avec le flux S2 dans l'espace entre les tubes 81 et les parois 8A et 8B. Au centre du tube 81, le flux d'air S1, non pollué, pénètre dans le tube 83 et est évacué à travers la paroi 8B. Il est admis dans le canal 6 pour être guidé vers la section de compression.

Afin d'assurer la ventilation et l'évacuation de l'air pollué vers l'extérieur, un ventilateur 10 aspire l'air à l'intérieur de l'enceinte du filtre 8 et le rejette.

Le module de ventilation 10, conforme à l'invention, est représenté en coupe axiale sur la figure 3.

Il comprend une roue de ventilateur 20, montée rotative dans un carter 30. La roue comprend un moyeu 21 se prolongeant d'un côté par un arbre central 22. Sur le moyeu 21, sont fixées radialement des ailettes de ventilateur 23, conformées pour être traversées axialement par l'air, parallèlement à l'axe de l'arbre central 22. Sur la périphérie de cette roue formée par les ailettes de ventilateur 23 sont disposées radialement des ailettes de turbine 24 à flux axial. Un anneau 25 sépare le flux d'air de ventilation du flux gazeux traversant les ailettes de turbine dans la direction axiale. La roue peut avantageusement être réalisée de manière monobloc par usinage d'un seul bloc.

L'arbre central 22 est monté rotatif en porte à faux dans une ogive 31 du carter 30. Le carter comprend une première enveloppe 33 cylindrique, définissant un premier canal annulaire, pour un flux d'air axial F1, avec l'ogive 31. Des ailettes de guidage 34 relient radialement la surface de l'ogive 31 à l'enveloppe 33. La veine pour le flux F1 a une ouverture correspondant à celle de la veine parcourue par les ailettes 23 de ventilateur. L'enveloppe se prolonge vers l'aval par l'anneau de séparation de flux 25.

Le carter définit, extérieurement à l'enveloppe 33, un second canal concentrique au premier canal avec deux éléments de parois 35 et 36. La paroi 35 forme, vue en coupe axiale, un coude à entrée radiale et qui se raccorde tangentiellement avec la paroi cylindrique. La paroi 36 espacé radialement de la paroi 35 forme également un coude à entre radiale et qui se raccorde tangentiellement à une paroi cylindrique 37 de rayon supérieur à celui de la paroi cylindrique 33. Ce second canal est ainsi à entrée radiale et sortie axiale. Le second canal pour le flux gazeux F2 est en forme de secteur d'anneau ou bien annulaire. La paroi cylindrique forme un anneau d'étanchéité entourant le rotor 1. Plus particulièrement, il forme anneau d'étanchéité pour les ailettes de turbine 24 avec le sommet desquelles il ménage un jeu minimum. Des ailettes de guidage 38 forment des injecteurs de gaz en direction des ailettes de turbine 24. De préférence la turbine est à action avec détente du gaz dans les injecteurs 38. De cette façon on évite les problèmes d'étanchéité entre les flux F1 et F2 parcourant le rotor de ventilateur 20. La figure 4 montre en coupe selon A-A de la figure 3, la forme des ailettes de turbine 24 ainsi que celle des ailettes de guidage 38 formant injecteurs.

Des brides 33A en amont permettent le montage du dispositif à un conduit provenant du filtre anti sable. Des brides 35A et 36A permettent le montage à un conduit communiquant avec un prélèvement sur le moteur, et des brides 37A permettent le raccordement à un conduit d'évacuation.

En fonctionnement du moteur, le dispositif de ventilation 10 reçoit les gaz F2, prélevés au moteur, qui sont guidés par le second canal vers les ailettes de turbine 24 qu'ils mettent en mouvement et entraînent la roue de ventilation. Par sa rotation les ailettes de ventilation 23 aspirent l'air F1 de l'intérieur du filtre 8. Les deux flux F1 et F2 sont réunis en aval de la roue 20 et dirigé vers l'extérieur.

En résumé, le dispositif de l'invention permet par son architecture de disposer d'une roue démontable aisément, simplifiant ainsi les procédures de maintenance, de réaliser une machine avec un nombre faible de pièces. Par exemple le remplacement du rotor 21 s'effectue aisément par l'arrière.

L'utilisation d'une turbine à action à son tour permet une simplification du distributeur, tolérant une injection partielle et dont le col peut être réalisé par simple perçage ; elle permet aussi de limiter l'impact des fuites par le faible delta de pression sur la roue.

Avantageusement les prélèvements de gaz peuvent être réalisés soit :
- entre la ou les turbine(s) haute pression et la ou les turbine(s) de puissance,
- dans la zone inter-étage de la turbine de puissance (dans le cas d'une turbine multi-étagée,
- à différents étages au niveau du compresseur.

## Revendications

1. Dispositif de filtrage d'air en entrée de moteur à combustion interne comprenant au moins un élément de filtrage (8) avec une entrée d'air à traiter, une première sortie d'air épuré vers le moteur et une deuxième sortie d'air vers l'extérieur, un moyen de ventilation (10) assurant l'entraînement de l'air depuis ladite deuxième sortie d'air, le moyen de ventilation comprenant une roue de ventilateur (23) entraînée par une turbine (24) mise en mouvement par un flux gazeux prélevé sur le moteur, **caractérisé par le fait que** la turbine (24) et la roue de ventilateur (23) sont disposées concentriquement l'une par rapport à l'autre, la roue de ventilateur (23) et la turbine (24) formant un rotor (20) monté dans un carter (30) dans lequel sont ménagés un premier canal, central, d'air de ventilation et un second canal, en forme d'au moins un secteur d'anneau d'alimentation de la turbine,le second canal étant concentrique au premier canal avec deux éléments de parois (35, 36) et étant à entrée radiale et sortie axiale.

2. Dispositif selon la revendication précédente dont les ailettes formant la turbine (24) sont disposées radialement à l'extérieur d'un anneau (25) reliant les extrémités extérieures des ailettes (23) du ventilateur.

3. Dispositif selon la revendication précédente dont la turbine (24) est de type à action.

4. Dispositif selon l'une des revendications précédentes dont la roue de ventilateur et la turbine forment un rotor en bout d'un arbre central (22) monté dans une ogive (31) dudit carter.

5. Dispositif selon l'une des revendications précédentes dont le moteur étant un moteur à turbine à gaz, le prélèvement de gaz est effectué soit au niveau du compresseur soit entre turbine de puissance et turbine haute pression soit entre les étages de la turbine de puissance.

6. Dispositif selon l'une des revendications précédentes, dans lequel :
- le carter comprend une paroi cylindrique (33),
- la paroi (35) forme, vue en coupe axiale, un coude à entrée radiale et qui se raccorde tangentiellement avec la paroi cylindrique (33) et
la paroi (36) est espacée radialement de la paroi (35) et forme également un coude à entrée radiale et qui se raccorde tangentiellement à une paroi cylindrique (37) de rayon supérieur à celui de la paroi cylindrique (33).

## Patentansprüche

1. Vorrichtung zum Filtern von Luft am Einlass einer Brennkraftmaschine, umfassend mindestens ein Filterelement (8) mit einem Einlass von zu behandelnder Luft, einen ersten Auslass von gereinigter Luft zum Motor und einen zweiten Auslass von Luft nach außen, ein Belüftungsmittel (10), das das Antreiben der Luft von dem zweiten Luftauslass gewährleistet,
wobei das Belüftungsmittel ein Gebläserad (23) aufweist, das von einer Turbine (24) angetrieben wird, die von einem Gasstrom, der am Motor entnommen wird, in Bewegung versetzt wird, **dadurch gekennzeichnet, dass** die Turbine (24) und das Gebläserad (23) konzentrisch zueinander angeordnet sind,
wobei das Gebläserad (23) und die Turbine (24) einen Rotor (20) bilden, der in einem Gehäuse (30) befestigt ist, in dem ein erster zentraler Lüftungsluftkanal und ein zweiter Kanal in Form von mindestens einem Ringsektor zur Versorgung der Turbine ausgebildet sind, wobei der zweite Kanal konzentrisch zu dem ersten Kanal mit zwei Wandelementen (35, 36) ist und einen radialen Einlass und einen axialen Auslass aufweist.

2. Vorrichtung nach dem vorhergehenden Anspruch, wobei die Schaufeln, die die Turbine (24) bilden, radial außerhalb eines Rings (25) angeordnet sind, der die zwei äußeren Enden der Ventilatorflügel (23) verbindet.

3. Vorrichtung nach dem vorhergehenden Anspruch, wobei die Turbine (24) des Typs der Aktionsturbine ist.

4. Vorrichtung nach einem der vorhergehenden Ansprüche, wobei das Gebläserad und die Turbine am Ende einer zentralen Welle (22), die in einer Ogive (31) des Gehäuses befestigt ist, einen Rotor bilden.

5. Vorrichtung nach einem der vorhergehenden Ansprüche, wobei, nachdem der Motor ein Gasturbinentriebwerk ist, die Gasentnahme entweder an dem Kompressor oder zwischen Leistungsturbine und Hochdruckturbine oder zwischen den Stufen der Leistungsturbine durchgeführt wird.

6. Vorrichtung nach einem der vorhergehenden Ansprüche, wobei:
- das Gehäuse eine zylindrische Wand (33) aufweist,
- die Wand (35), im Axialschnitt gesehen, einen Bogen mit radialem Einlass bildet und die sich tangential mit der zylindrischen Wand (33) verbindet, und die Wand (36) radial von der Wand (35) beabstandet ist und ebenfalls einen Bogen mit radialem Einlass bildet und die sich tangential an eine zylindrische Wand (37) mit einem größeren Radius als jenem der zylindrischen Wand (33) anschließt.

## Claims

1. A device for filtering intake air of an internal combustion engine, comprising at least one filtering element (8) having an inlet for air being treated, a first clean air outlet towards the engine and a second air outlet towards the outside, a ventilation means (10) impelling the air from said second air outlet, the ventilation means including a fan wheel (23) driven by a turbine (24) which is set in motion by a gas flow taken from the engine, **characterized by** the fact that the turbine (24) and the fan wheel (23) are arranged concentrically with respect to one another, the fan wheel (23) and the turbine (24) form a rotor (20) mounted in a casing (30) in which are formed a first, central, channel for ventilation air and a second channel, having the shape of at least one ring sector, for supplying the turbine, the second channel being concentric to the first channel wth two wall elements (35, 36) and being with inlet and an axial inlet.

2. The device as claimed in the preceding claim, wherein the blades forming the turbine (24) are disposed radially outside a ring (25) connecting the outer ends of the fan blades (23).

3. The device as claimed in the preceding claim, wherein the turbine (24) is of the action type.

4. The device as claimed in the preceding claim, wherein the fan wheel and the turbine form a rotor at the end of a central shaft (22) mounted in a nose cone (31) of said casing.

5. The device as claimed in any one of the preceding claims, wherein, the engine being a gas turbine engine, the gas is taken off either at the compressor, or between power turbine and highpressure turbine, or between the stages of the power turbine.

6. The device as claimed in any one of the preceding claims, wherein :
- the casing comprises a cylindrical wall (33),
- the wall (35, in axial section, forms an elbow with a radial inlet, which elbow joins the cylindrical wall (33) tangentially and
the wall (36) is spaced radially from the wall (35) and also forms an elbow with a radial inlet, which elbow joins tangentially a cylindrical wall (37) having a radius greater than that of the cylindrical wall (33).
